Europäisches Patentamt

European Patent Office

Office européen des brevets

(11) Veröffentlichungsnummer: **0 097 621**
**A1**

## (12) EUROPÄISCHE PATENTANMELDUNG

(21) Anmeldenummer: **83810275.4**

(22) Anmeldetag: **20.06.83**

(51) Int. Cl.³: **G 06 F 13/00**
**aH 04 L 9/00**

(30) Priorität: **21.06.82 CH 3799/82**

(43) Veröffentlichungstag der Anmeldung:
**04.01.84 Patentblatt 84/1**

(84) Benannte Vertragsstaaten:
**AT BE CH DE FR GB IT LI LU NL SE**

(71) Anmelder: **Muessli, Daniel**
**Erlenholz 8**
**CH-9303 St. Gallen-Wittenbach(CH)**

(72) Erfinder: **Muessli, Daniel**
**Erlenholz 8**
**CH-9303 St. Gallen-Wittenbach(CH)**

(74) Vertreter: **Frei, Alexandra Sarah**
**Egli Patentanwälte Horneggstrasse 4**
**CH-8008 Zürich(CH)**

(54) Verfahren zur Verschleierung digitaler Information und Vorrichtung zur Durchführung des Verfahrens.

(57) Das Datenverwirbelungsmittel (10) besteht aus einem in den Datenbus geschalteten elektronischen Datenvertauschungsmittel (14) zur Vertauschung der ankommenden Datenleitungen (17) in eine neue Anordnung der Datenleitungen (71), einem das Datenvertauschungsmittel steuernden Speichermittel (12), enthaltend eine Vertauschungsvorschrift, und einem Orientierungsmittel (15), in diesem Falle der Adressbus.

FIG. 1

EP 0 097 621 A1

Verfahren zur Verschleierung von digitaler Information und Vorrichtung zur Durchführung des Verfahrens

Die Erfindung betrifft ein Verfahren zur Verschleierung von digitaler Information, insbesondere von buskoordinierten, digitalen Daten, sowie eine Vorrichtung zur Durchführung des Verfahrens.

Das Erstellen von Computerprogrammen ist nicht selten mit erheblichem intellektuellem und finanziellem Aufwand verbunden. Oft übertrifft der materielle Wert des Programmaufwandes den Wert der damit betriebenen Bauteile. Mit dem Aufkommen und der heute immer schnelleren Verbreitung der einmalig programmflexiblen Mikroprozessoren jeder Bauart wird immer mehr physikalischer Schaltungsaufwand durch materienfreien Programmaufwand ersetzt;
einerseits, um einfaches Leitermaterial bis hin zu teuren
Bauteilen zu sparen, und andererseits, um eine durch übliche, schaltungsmässige Auslegung nur schwer oder gar
nicht mehr erreichbare Flexibilität bezüglich problemorientierter Anwendung herbeizuführen.

Der finanzielle Aufwand teurer, intellektueller
Leistung kann nur durch vervielfachten Verkauf dieser
Leistung wieder rekuperiert werden. Die für den Verkauf
nötige Kopierbarkeit, mit anderen Worten, die herstellungsmässige, möglichst einfache Vervielfältigung des die
intellektuelle Leistung enthaltenden Produkts ist für den
Hersteller eine Voraussetzung, aber damit auch eine
inhärente Eigenschaft dieses Produkts: die einfache
Kopeirbarkeit ist damit jedem einigermassen Sachverständigen möglich.

Die meisten bekannten Massnahmen zum Schutz von
Programmdaten sind organisatorischer Art und basieren auf
Vereinbarungen mehr oder weniger verpflichtender Art,
beispielsweise Verträge. Des weiteren werden Verschlüsselungen von Programmen verwendet; auch Sicherheitscodes, Passwörter, etc. sind üblich. Das Bedürfnis zum Schutz der intellektuellen Leistung in Form von Computerprogrammen ist überall, wo solche Programme erarbeitet werden, stark vorhanden.

Es ist Aufgabe der Erfindung, ein Verfahren zur Verschleierung von Programmdaten anzugeben und eine Vorrichtung zu schaffen, mit der Programmdaten, aber auch andere Daten, gegen unbefugten Zugriff geschützt sind.

Es ist weiter Aufgabe der Erfindung, eine Massnahme anzugeben, die geeignet ist, ohne grossen Aufwand einen beliebigen Typ von Mikroprozessor so auszurüsten, dass er als datensicher betrachtet werden kann.

Die Aufgabe wird durch die in den Patentansprüchen angegebene Erfindung gelöst.

Die Erfindung wird nun mit Hilfe der nachfolgend aufgeführten Figuren im einzelnen beschrieben. Es zeigen:

Fig. 1    in sehr schematischer Darstellung das Prinzip
der Erfindung und zugleich eine erste Ausführungsform der elektronischen Schaltungsvorrichtung;

Fig. 2    in mehr detaillierter Darstellung eine zweite
Ausführungsform der elektronischen Schaltungsvorrichtung gemäss Erfindung;

Fig. 3    in Anlehnung an Figur 2 eine dritte Ausführungsform der elektronischen Schaltungsvorrichtung
gemäss Erfindung zur zusätzlichen Erhöhung der
Sicherheit gegen unerlaubtes Ordnen der Information; und

Fig. 4    eine vierte, mit verhältnismässig einfachem
Schaltungsaufwand realisierbare Ausführungsform
der elektronischen Schaltungsvorrichtung gemäss
Erfindung.

Daten im allgemeinen, Programmdaten im speziellen werden dem diese Daten verarbeitenden Mikroprozessor in streng geordneter Weise in Form eines Datenowrtes zugeführt Die organisiert starre Anordnung der einzelnen bits in einem Datenwort wird durch die geometrisch feste Anordnung des diese Daten übertragenden Bussystems fixiert. Das Bussystem ist also ein Element zur Aufrechterhaltung einer verabredeten Ordnung innerhalb des datenverarbeitenden Systems; ausserdem ist das Bussystem beispielsweise im Gegensatz zu den jedem Datenwort beigeordneten Adressen, ein Ordnungselement in Hardwareausführung, also örtlich fest und vor allen Dingen physikalisch recht einfach feststellbar. Uebliche und damit bekannte Schutzmassnahmen in Richtung Verschleierung der Information zielten stets in Richtung Maskierung und Codierung schon im Softwarebereich; dazu werden Codierer und Decodierer verwendet, um zumindest während der Uebertragung der Information die Geheimhaltung zu gewährleisten. Doch an beiden Enden der Uebertragungskette bestand jeweils wieder die Gefahr einer unerwünschten Klartextvervielfältigung.

Die Erfindung versucht nun, durch eigentliche Hardware-Massnahmen Information so zu verbergen, dass sie im Extremfall nur noch vom verarbeitenden Prozessor im Datenverarbeitungssystem "erkannt" werden kann. Ausserdem soll die Erfindung ein unbefugtes Abfühlen der Information weitestgehend verhindern; sie zielt auf ein eigentlich geschlossenes System zum Schutz von (vorwiegend Programm-) Daten hin. Die Verschleierung der Infromation soll in einem sogenannten zentralen Datenbussystem vor sich gehen, welches System von aussen nicht zugreifbar ist.

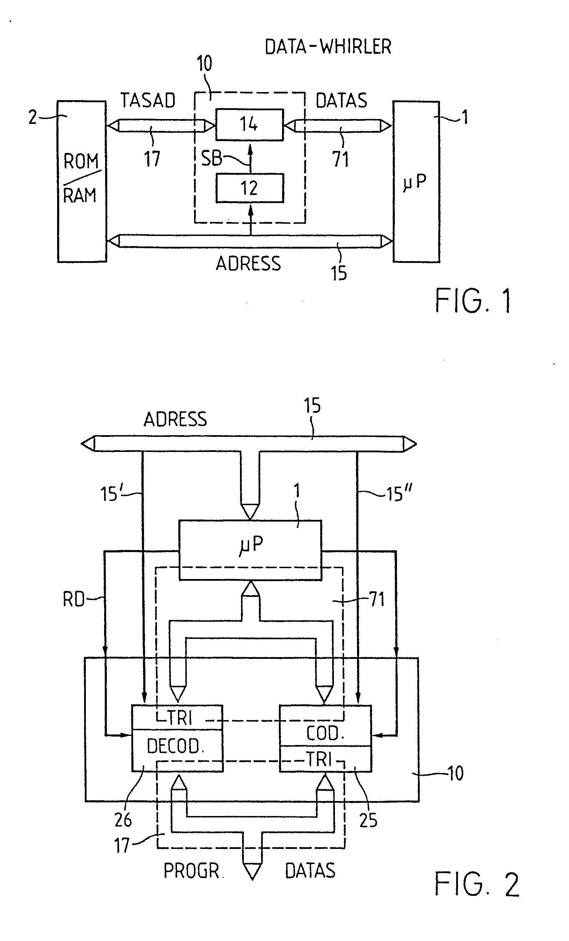

Figur 1 zeigt in einfachstem Aufbau einen Mikroprozessor 1, einen allgemeinen Speicher 2 und als gestrichelt gezeichnete Blackbox einen Datenverwirbler und -entwirbler 10, enthaltend ein elektronisches Datenvertauschungsmittel 14 sowie einen sogenannten Schlüsselspeicher 12. Steuerleitungen, überhaupt alle zur Erklärung der Erfindung unwesentlichen Verbindungen, sind weggelassen.

Des weiteren verbindet ein Adressbus den allgemeinen Speicher, ein RAM oder ROM, mit dem µP-Port für die Adressierung. Der Datenbus dagegen führt durch die Wirbeleinrichtung 10, welche ihrerseits zur Vermittlung zwischen den beiden Ordnungszuständen "verwirbelt" und "entwirbelt" noch zusätzlich Information vom Adressbus zugeführt enthält.

Wie später noch ausgeführt wird, bildet der Datenbusteil 17 ein äusseres und der Teil 71 ein inneres, also zentrales Datenbussystem. Der Zahlendreher 71/17 steht symbolisch für die Verwirbelung, 17 verwirbelt für die Hardcopy, 71 entwirbelt für den Mikroprozessor.

Der Schlüssel ROM kann beispielsweise ein PROM, EPROM, REPROM, etc. sein für austauschbare, anwendungsspezifische Verwirbelungsvorschriften oder aber ein ROM bzw. eine feste Schaltung für eine einmalige, festgelegte Verwirbelungsvorschrift.

Bei der Verwirbelung der Daten geht es darum, nach einer bestimmten, aber beliebig wählbaren Vorschrift Datenleitungen des Bussystems untereinander zu vertauschen. Diese Vertauschung wird im Datenvertauschungsmittel 14 unter Anleitung des Schlüsselspeichers 12 vorgenommen. Die Verwirbelungsvorschrift kann ein beliebiger Algorithmus sein, der sich beispielsweise wie hier dargestellt an der Adresse des zu verwirbelnden Datenwortes orientiert. Da eine strenge Verknüpfung zwischen Ver- und Entwirbelung bestehen muss, bietet sich die Adressinformation zum Wiederauffinden einer spezifischen Verwirbelung und der Zuordnung der verwendeten Vorschrift als ein geeignetes Mittel
an.

Die zu verwendende Wirbeleinrichtung besteht aus
einer elektrischen Schaltung, die geeignet ist, elektronisch die Busleitungen beliebig zu kreuzen oder zu vertauschen, und die geeignet ist, eine Kreuzungsvorschrift
austauschbar oder fest aufzunehmen, und die letztlich geeignet ist, auf demselben Substrat wie der Mikroprozessor
selbst angeordnet zu werden. Dazu eignet sich beispielsweise Schaltungen in Dickfilm- oder Dünnfilmtechnik, die in die
Prozessor-"Peripherie" eingebondet wird, oder aber die Verwirbelungsschaltung wird via Layout mit in den Chip integriert. Als Bestandteil des Prozessorchips kann in der
Verwirbelungsvorrichtung beispielsweise im Sinne einer
1*1-Vorschrift keine Vertauschung vorgesehen sein bzw.
bei deren Aktivierung eine solche stattfinden. Dabei ist
es möglich, vorzusehen, dass die Verwirbelungsvorschrift
bzw. diverse Verwirbelungsvorschriften via Programm, via
Ladeeingriff, via Dateneingriff im allgemeinen etc. eingebracht werden können. Die zur Verwirbelung verwendeten Schaltungsteile können mit bipolaren PROMs, PLA, C-MOS-RAM, bipolaren RAM, EEPROMS, EPROMS, no-voltage-RAMs, ULAs realisiert werden.

Figur 2 zeigt ein anderes Schaltungs- und Ausführungsbeispiel der Erfindung mit zusätzlichen Details. Ein Mikroprozessor 1 ist an ein zentrales Datenbussystem 71 angeschlossen, das in eine Wirbeleinrichtung führt, bestehend aus einem Codierer 25 und einem Decodierer 26; davon weg führt das äussere Datenbussystem beispielsweise auf die Klemmen des DATA-Port oder auf einen beliebigen Speicher. Wichtig ist die Unterscheidung zwischen nichtzugänglichen Datenleitungen, auf denen die unverwirbelte Information verkehrt, und den zugänglichen Datenleitungen, auf denen nach Wahl ver- oder unverwirbelte Daten verkehren. Die Zugänglichkeit soll dabei so begriffen werden, dass auch geräteinterne Anzapfungen durch Fachleute als zugänglich betrachtet werden, d. h. unzugänglich wird es dann, wenn für eine eventuelle Anzapfung keine Klemmen im weitesten Sinne mehr verfügbar sind. Auch gegen nichtgalvanische Anzapfungen soll der Bauteil geschützt sein, welche Schutzmassnahmen mit bekannten Mitteln getroffen werden können.

Auf die Wirbeleinrichtung führen vom Mikroprozessor zusätzlich beispielsweise Steuerleitungen RD bzw. WR und Zuleitungen 15', 15" für die Adressinformation aus dem Adressbus 15. Die Zuleitungen 15', 15" sind aus Gründen der übersichtlichen Darstellung als einfache Zuleitungen und nicht als Bussymbol gezeichnet. Die Bidirektionalität der Schaltung kann leicht mit Tristate-Bauelementen realisiert werden, was im Beispiel der Figur 2 mit TRI angedeutet ist.

Das Einlesen eines verwirbelten Programms geschieht über die Decodierstufe 26, das Auslesen über die Codierstufe 25. Der Zusammenhang der beiden Stufen ist über den Adressbus gegeben. Die Verwirbelungsvorschrift in der Blackbox 25 arbeitet invers zur Entwirbelungsvorschrift der Blackbox 26. Je nach Aufbau der Vorschrift besteht eine Beziehung $W*W^{-1}$, W für Wirbel, so dass die beiden Bausteine beliebig alternierend verwendet werden können, d. h. beide können je nachdem Codieren oder Decodieren, da jeder der beiden Bausteine die Wirbelung des anderen rückgängig machen kann. Dabei können selbstverständlich zwei oder mehr designierbare Wirbelpfade vorgesehen sein, um die Sicherheit zu erhöhen.

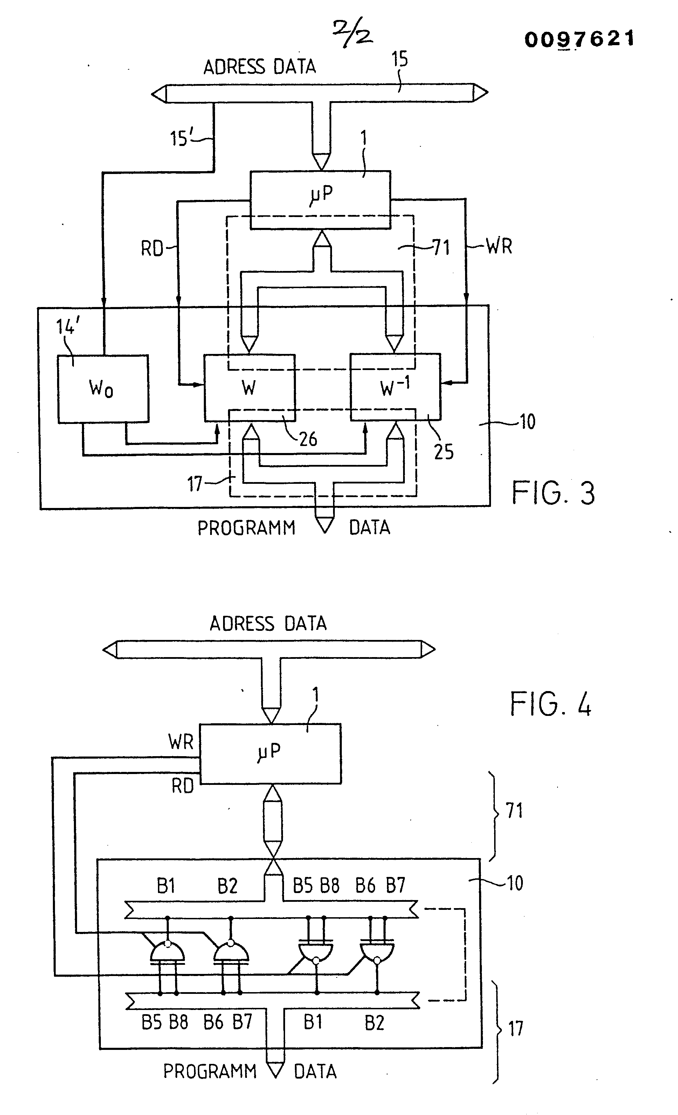

Figur 3 zeigt in Erweiterung der Ausführungsform gemäss Figur 2 innerhalb des Datenverwirbelungsmittels 10 ein Datenvertauschungsmittel 14' zur zusätzlichen Verwirbelung der Adressinformation, die ja zur Orientierung bei der (Programm-)Datenverwirbelung dient. Selbstverständlich muss auch bei der Adressdatenvertauschung eine "rückführende" Vorschrift existieren, um dem Prozessor die Verarbeitung der Daten zu ermöglichen. Die Verwirbelung $W_O$ ist so bezeichnet, um sie gegen ein zueinander reversibel oder rückführend wirkendes Verwirbelungspaar $W*W^{-1}$ abzuheben. Für dieses $W*W^{-1}$-Paar ist $W_O$ die Orientierung; $W_O$ dagegen orientiert sich an einer anderen festen Vorschrift.

Auch hier sind wieder - wie schon erwähnt - mehrfache, über eine Mehrzahl von Datenverwirbelungsmitteln 10, 10' ... $10^{n'}$ laufende, parallel zueinander wirkende Wirbelpfade möglich, wobei jeder Pfad einer anderen, in den Mitteln 10 enthaltenenen Zuordnungsvorschrift gehorcht. Die Verwirbelung der einzelnen Vorschriften oder Tabellen wäre dann eine Verwirbelung noch höherer Ordnung als beispielsweise die Adressdatenverwirbelung bzw. einer Verwirbelung der in diesem Fall ersten Orientierung.

Figur 4 schliesslich zeigt - aus einer notabene Vielzahl möglicher Ausführungsformen - eine bezüglich Schaltungsaufwand besonders einfache Lösung. Eine 2x2-XOR-Anordnung im Sinne der $W*W^{-1}$-Zuordnung erlaubt mittels Steuerung mit READ/WRITE eine Verwirbelung der Daten auf B1/B2 zu B5 bis B8. Dasselbe tut je nach Bedarf auch eine erweiterte 3x3- bis nxn-Anordnung. Die Aequivalente zu den vorher beschriebenen Ausführungsformen sind leicht zu erkennen: das zugriffsgeschützte interne Datenleitungssystem 71, das zugriffsfähige externe Datenleitungssystem 17, das Datenverwirbelungsmittel 10 und schliesslich in dieser Figur nicht eingezeichnet Datenvertauschungsmittel 14 in Form von nxn-XOR-Schaltungen, die auch gleich hardwaremässig fixiert die Zuordnungsvorschrift enthalten.

PATENTANSPRÜCHE

1. Verfahren zur Verschleierung von digital anfallender Information in einer datenverarbeitenden Maschine mit Speichermitteln und Datenverarbeitungsmitteln und diese Mittel verbindende Datenleitungen, gekennzeichnet durch planmässiges, gegenseitiges Vertauschen der Daten auf den Datenleitungen zwischen Speichermitteln und Datenverarbeitungsmitteln.

2. Verfahren nach Anspruch 1, gekennzeichnet durch die Vertauschung der Datenbusleitungen.

3. Verfahren nach Anspruch 2, gekennzeichnet durch je eine Vertauschung von Datenbusleitungen pro vorbestimmte Adresskombination.

4. Elektronische Schaltungsvorrichtung zur Durchführung
des Verfahrens nach Anspruch 1 in der Maschine mit
Speichermitteln und Datenverarbeitungsmitteln und
diese Mittel verbindende Datenleitungen, gekennzeichnet durch die Zwischenschaltung in mindestens zwei
Datenleitungen eines Datenverwirbelungsmittels (10)
und Aufteilung des Datenleitungssystems in einen
zugriffsgeschützten internen Teil (71) und einen
zugriffsfähigen externen Teil (17).

5. Elektronische Schaltungsvorrichtung nach Anspruch 4,
dadurch gekennzeichnet, dass das Datenverwirbelungsmittel (10) aus einem elektronischen Datenvertauschungsmittel (14) und einem das Vertauschungsmittel
ansteuernden Schlüsslspeicher (12) besteht.

6. Elektronische Schaltungsvorrichtung nach Anspruch 5,
gekennzeichnet durch die Zwischenschaltung eines
elektronischen Datenvertauschungsmittels (14) in den
Datenbus (17); durch die Zuschaltung eines Schlüsselspeichers (12) zwischen Adressbus (15) und Datenvertauschungsmittel (14), einem Steuerbus (SB) als
Verbindung zwischen dem Datenvertauschungsmittel (14) und dem Schlüsselspeicher (12) sowie einem zugriffsgeschützten Datenbus (71) als Verbindung zwischen dem
Datenvertauschungsmittel (14) und einem Mikroprozessor
(μP).

7. Elektronische Schaltungsvorrichtung nach Anspruch 4,
gekennzeichnet durch eine Aufzweigung des Datenbus (17),
eine Codierschaltung (25, 26) im einen Datenbuszweig
und eine Decodierschaltung (25, 26) im anderen Datenbuszweig und eines zugriffsgeschützten Datenbus (71)
als Verbindung zwischen Codierer/Decodierer (25, 26)
und einem Mikroprozessor (μP).

8. Elektronische Schaltungsvorrichtung nach Anspruch 7,
gekennzeichnet durch die Zwischenschaltung eines
Vertauschungsmittels (14') in die Datenleitungen
des Adressbus (15', 15") zur planmässigen Verwirbelung der Orientierung.

9. Elektronische Schaltungsvorrichtung nach einem der
Ansprüche 5, 6 und 7, gekennzeichnet durch lösch-
und neuprogrammierbare ROM-Speicherelemente.

10. Elektronische Schaltungsvorrichtung nach einem der Ansprüche 5, 6 und 7, gekennzeichnet durch die Verwendung von PLA-Bauelementen.

11. Elektronische Schaltungsvorrichtung nach Anspruch 9, gekennzeichnet durch die Verwendung von Tristate-Bauelementen.

12. Elektronische Schaltungsvorrichtung nach Anspruch 4, dadurch gekennzeichnet, dass das Datenverwirbelungsmittel (10) eine auf dem Mikroprozessorsubstrat angeordnete und in die äusseren Leiterbahnen der integrierten μP-Schaltung eingebondete Dickfilmschaltung ist.

13. Elektronische Schaltungsvorrichtung nach Anspruch 4, dadurch gekennzeichnet, dass das Datenverwirbelungsmittel (10) ein mit der gleichen Herstellungstechnik wie der μP-hergestellter Bestandteil des μP-Chips ist.

DATA-WHIRLER

FIG. 1

FIG. 2

ADRESS DATA

15

15'

μP 1

RD 71 WR

14'

W₀ W W⁻¹

26 25 10

17

PROGRAMM DATA

FIG. 3

ADRESS DATA

1

WR μP

RD

71

B1 B2 B5 B8 B6 B7 10

B5 B8 B6 B7 B1 B2

17

PROGRAMM DATA

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 546 380  (STURZINGER) * Figuren 1,2; Spalte 2, Zeilen 12-48; Spalte 4, Zeilen 12-64 * | 1-6 | G 06 F   13/00 H 04 L    9/00 |
| Y | IBM TECHNICAL DISCLOSURE BULLETIN, Band 14, Nr. 11, April 1972, Seite 3509, New York, USA J.A.  PAINTER: "Memory privacy device" * Figur; Seite 3509 * | 1-6 | |
| A | IBM TECHNICAL DISCLOSURE BULLETIN, Band 12, Nr. 2, Juli 1969, Seite 257, New York, USA L.E.  HANDLOFF:  "Storage protect system" * Figur; Seite 257 * | 1,4,7 | |
| A | FR-A-2 383 482  (KEARNEY & TRECKER CORP.) * Figuren 2,4; Seite 8, Zeile 32 - Seite 9, Zeile 29 * | 1,8 | RECHERCHIERTE SACHGEBIETE (Int. Cl. ³) |
| A | IBM TECHNICAL DISCLOSURE BULLETIN, Band 19, Nr. 12, Mai 1977, Seiten 4564-4568, New York, USA R.W.                    CALLAHAN: "Encrypting/decrypting communication link" | 1 | G 06 F   13/00 H 04 L    9/00 |

Der vorliegende Recherchenbericht wurde für alle Patentansprüche erstellt.

| Recherchenort DEN HAAG | Abschlußdatum der Recherche 08-08-1983 | Prüfer LEDRUT P. |
|---|---|---|